# EUROPEAN PATENT SPECIFICATION

(11) **EP 2 201 219 B1**
(45) Date of publication and mention of the grant of the patent: **18.06.2014**
(21) Application number: 08835918.7
(22) Date of filing: 03.10.2008
(51) Int. Cl.: F01B 7/00, F02G 1/04, F01B 23/10, F02B 63/04, F01B 11/00, H02K 7/18

(54) **ELECTROMAGNETIC ENGINE**
ELEKTROMAGNETISCHER MOTOR
MOTEUR ÉLECTROMAGNÉTIQUE

(30) Priority: 04.10.2007 US 973297; 05.10.2007 US 973343; 09.10.2007 US 973640; 10.10.2007 US 974173
(43) Date of publication of application: 30.06.2010
(60) Divisional application: 10174618.8
(73) Proprietor: The Invention Science Fund I, LLC, Bellevue, WA 98004 (US)
(72) Inventor: HYDE, Roderick A., Redmond WA 98052 (US); GATES, III, William, Redmond WA 98052-6399 (US); ISHIKAWA, Muriel Y., Livermore CA 94550-4921 (US); KARE, Jordin T., Seattle WA 98112 (US); MYHRVOLD, Nathan P., Bellevue, WA 98004 (US); TEGREENE, Clarence T., Bellevue WA 98004-2834 (US); WEAVER, Thomas A., San Mateo CA 94402 (US); WHITMER, Charles, North Bend WA 98045 (US); WOOD, Lowell L., Jr., Bellevue WA 98004 (US); WOOD, Victoria Y.H., Livermore CA 94550-4921 (US)
(74) Representative: Harris, Ian Richard
(86) International application number: PCT/US2008/011482
(87) International publication number: WO 2009/045521

(56) References cited:
- WO-A1-01/88353
- WO-A1-2004/025098
- WO-A2-01/45977
- GB-A- 2 219 671
- JP-A- 2005 318 708
- US-A- 1 167 366
- US-A- 2 362 151
- US-A- 3 206 609
- US-A- 4 213 428
- US-A- 4 631 455
- US-A1- 2005 081 804
- US-A1- 2007 157 894
- US-B2- 6 506 139

## Description

### BACKGROUND

WO2004/025098 discloses an energy converter, comprising a combustion system comprising at least one piston, at least one combustion chamber provided with at least one inlet and at least one outlet, inlet and outlet valves, of which at least one inlet valve or at least one outlet valve is controllable, means for supplying fuel and a medium containing oxygen into the combustion chamber, an electric machine arranged to interact directly or indirectly with the piston in an electromagnetic manner as to produce electrical energy from piston movements as well as to use electrical energy to affect the piston movements, and a control unit that controls the combustion system and the electric machine. the energy converter is arranged to adapt its power output depending on the required load of the energy converter.

US 2005/081804 discloses providing a universally usable free-piston device with electric linear drive comprising at least one piston receptacle with at least one piston device arranged for linear displacement in the piston receptacle. The piston device comprises a traveller device. A stator device is arranged on the piston receptacle. The piston device is drivable under the action of a medium which expands in an expansion space. The piston stroke is variably adjustable via the linear drive such that the dead centers of the displacement of the piston device are definable.

WO 01/45977 refers to a device, which includes a combustion engine with a piston, which is mechanically freely movable in a housing. The device is arranged to permit combustion of a fuel mixture in order to produce a pushing force to the piston. The device includes an electromagnetic energy transducer and an external current circuit, which is connected to the energy transducer for exchange of effect in a direction to or from the energy transducer. A control unit is arranged to control the direction of the effect, which is exchanged between the energy transducer and the external current circuit, during operation of the device.

JP 2005/318708 discloses a free piston generator not requiring a pair of free piston engines facing each other. The free piston generator comprises one free piston engine, and a linear generator generating power by the reciprocal movement of the free piston of the engine. An intake stroke, a compression stroke and an exhaust stroke of the free piston engine are carried out by driving the linear generator as a motor, and a power generation output is taken out of the linear generator at the time of the combustion expansion of the free piston engine.

WO 01/88353 discloses a free piston internal combustion engine, particularly suitable for use in a vehicle having an electric motor as a prime mover, has a combustion cylinder, a piston reciprocally disposed within the cylinder, and a piston rod coupled with a piston. A linear electric generator/motor includes at least one magnet carried by the piston rod and at least one coil positioned in association with the at least one magnet. An electrical circuit is coupled with each of the at least one coil and a battery. The at least one magnet induces an electrical current within the coil to energize a capacitor within the electrical circuit. The charge from the capacitor may be used to charge the battery. The capacitor and/or battery provides output electrical current which is used to drive the electric motor.

GB 2219671 discloses a hybrid engine that employs a reciprocating piston carrying a magnet cooperating with fixed windings of yoke to generate electrical power. Computer controls the effective impedance of windings and currents (e.g. from a battery) through windings to control the motion of the magnet and hence of the piston (e.g. for starting purposes) using position sensor. Computer also controls other devices to regulate ignition timing, fuel injection, air intake, valve motion, etc. The power output may be used to drive A.C., D.C. or A.C./D.C. motors or to charge batteries.

### SUMMARY

The invention is defined in the claims.

In one aspect, an internal combustion engine, comprises: a first piston slidably disposed in a first cylinder, the first cylinder having a first closed end and a second closed end; a first port disposed proximate to the first closed end of the first cylinder and configured to admit a first reactant to the first closed end of the first cylinder and a second portdisposed proximate to the second closed end of the first cylinder and configured to admit a second reactant to the second closed end of the first cylinder; and a first converter operable with the first piston to convert mechanical energy of the first piston from and to electrical energy within each piston cycle of repeated piston cycles. The first converter is configured, in a said piston cycle,
to drive the first piston during a first intake stroke in which the first piston moves away from the first closed end of the first cylinder and a first reactant is introduced into the first closed end of the first cylinder,
to drive the first piston during a first compression stroke in which the first reactant is compressed in the first closed end of the first cylinder,
to convert mechanical energy of the first piston to electrical energy during a first power/exhaust stroke in which the first piston moves away from the first closed end of the first cylinder in response to a chemical reaction in the first closed end of the first cylinder, thereby at least partially exhausting a reaction product in the second closed end of the first cylinder,
to drive the first piston during a second intake stroke in which the first piston moves away from the second closed end of the first cylinder and the second reactant is introduced into the second closed end of the first cylinder,
to drive the first piston during a second compression stroke in which a second reactant is compressed in the second closed end of the first cylinder, and
to convert mechanical energy of the first piston to electrical energy during a second power/exhaust stroke in which the first piston moves away from the second closed end of the first cylinder in response to a chemical reaction in the second closed end of the first cylinder, thereby at least partially exhausting a reaction product in the first closed end of the first cylinder

The first piston may include a magnet (*e.g*., a permanent magnet or an electromagnet), and the first converter may include an armature configured to generate electric current in response to movement of the magnet or to move the magnet by driving electric current through a coil.

The first converter may include a plurality of coils, in which case a first subset of the plurality may be operable to convert electrical energy to mechanical energy of the first piston, and a second subset to convert mechanical energy of the first piston to electrical energy. The engine may further include a thermal controller that acts to limit thermal excursions of all or a portion of the engine (*e.g*., a cooling system or insulation). The first piston may include an armature configured to interact with a magnetic field through a variable reluctance or variable inductance magnetic circuit.

The engine may further include a reaction trigger (*e.g*., an electrical igniter such as a spark plug, a thermal igniter, a chemical igniter, a catalyst, a hypergolic injector, particle beam igniter, or a plasma injector) configured to initiate a chemical reaction in a reactant disposed between the first piston and the closed end of the first cylinder. The reaction trigger may be disposed at the closed end of the first cylinder, on the first piston, or elsewhere. The reaction trigger may draw power from the first converter, may be electrically coupled to the first converter, or may draw power from an energy management system coupled to the first converter. The first port may include a valve, which may be configured to open and close via a camshaft, which may in turn be configured to be rotated by an electromagnetic actuator such as a stepper motor, or the valve may be mechanically actuated. The engine may include a second port configured to allow a reaction product to escape from the first cylinder (*e.g*., on the first cylinder or on the first piston), in which case the first port may include an intake valve and the second port an exhaust valve. The intake and exhaust valves may each be configured to open and close at selected times during the piston cycle (*e.g*., by mechanical or electronic coupling to the first piston). The intake and exhaust valves may be electronically coupled to the first piston via the first converter. The converter or an energy management system may be configured to supply power to the intake valve and the exhaust valve. The first port may be configured to allow a reaction product to escape from the first cylinder (*e.g*., on the first cylinder or on the first piston), in which case the engine may include a valve configured to switch the first port from connection with an intake path to connection with an exhaust path.

The engine may further include a carburetor configured to deliver a reactant mixture to the first port. The engine may include an injector (*e.g*., a fuel injector or a liquid reactant injector) configured to deliver a reactant to the first cylinder via the first port. The first port may be configured to admit fuel, oxidizer, a mixture thereof, or a reactant mixture to the first cylinder, or first and second reactants (*e.g*., fuel and oxidizer) may be admitted through the first and a second port, respectively. The first piston may be connected to a crankshaft. The engine may further include a second piston slidably disposed in a second cylinder, in which case the first and second pistons may be configured for asynchronous or synchronous reciprocation, or may be coupled to a common or to separate crankshafts. The engine may be configured to run in a first mode in which a chemical reaction drives only the first piston and in a second mode in which a chemical reaction drives the first piston and the second piston, in which case the engine may select between the first and second modes in response to actual or predicted operating conditions. The engine may also be configured to determine a velocity profile or length of a piston stroke or a compression ratio in response to operating conditions. In any of these cases, operating conditions may include incline, temperature, current draw, speed, acceleration, braking, load, fuel composition, engine emissions, power, local rules, or engine settings. The engine may further include an energy management system electrically coupled to the first converter, which may include an energy storage device such as a battery, capacitor, inductor, or mechanical energy storage device. The first cylinder may have a non-circular cross section, in which case the first piston may have a matching non-circular cross section. The first cylinder may be curved (so that the piston travels in a nonlinear path). The first piston may be configured to rotate in the first cylinder (*e.g*., by the shapes of the first piston and first cylinder, by gas pressure, or by magnetic forces). The first piston may be coupled to a mechanism that converts piston travel to rotary movement (*e.g*., a helical gear). The mechanism may include a magnet, and the first converter an armature that operates with the magnet to convert rotation of the magnet to electrical energy. The mechanism may include an armature that interacts with a variable reluctance or variable inductance magnetic circuit to convert rotary movement to electrical energy. The mechanism may be configured to rotate at a variable speed in response to a fixed piston speed. The first piston may be operably linked to an active material element (*e.g*., piezoelectric, magnetostrictive, electrostrictive, or shape memory material) that is configured to respond to applied force to generate electrical energy.

In another aspect, there is provided a method of operating the aforementioned internal combustion engine.

An embodiment of the method includes introducing a reactant into a closed end of the first cylinder, applying electrical energy to the first converter to slide the first piston in the first cylinder toward the closed end (optionally compressing the introduced reactant), triggering a chemical reaction of the introduced reactant, thereby transforming chemical potential energy to mechanical energy of the first piston, and converting the mechanical energy of the first piston to electrical energy via the first converter. Introducing reactant into the closed end of the first cylinder may include applying electrical energy to the first converter to slide the first piston in the first cylinder away from the closed end. The method may further include applying electrical energy to the first converter to slide the first piston toward the closed end after triggering the chemical reaction. The first piston may travel a greater distance immediately subsequent to triggering the chemical reaction than during introduction of the reactant into the closed end of the first cylinder. For example, the first piston may travel two or four times an inner cylinder diameter immediately subsequent to triggering the chemical reaction. Compressing the introduced reactant may include compressing the reactant substantially adiabatically or isothermally.

The internal combustion engine may further include a second piston slidably disposed in a second cylinder, in which case the method may further include triggering a chemical reaction in the second cylinder at substantially the same time the chemical reaction is triggered in the first cylinder. The method may include triggering a chemical reaction in the second cylinder at a substantially similar or at a different operating frequency from the first cylinder. The method may also include determining whether to trigger the chemical reaction in the second cylinder at least in part on the basis of an actual or predicted operating condition (*e.g*., incline, temperature, current draw, speed, acceleration, braking, load, fuel composition, engine emissions, power, local rules, or engine settings). The method may include determining an operating frequency or compression ratio for the first cylinder based at least in part on an actual or predicted operating condition (*e.g*., incline, temperature, current draw, speed, acceleration, braking, load, fuel composition, engine emissions, power, local rules, or engine settings). Introducing reactant into a closed end of the first cylinder may include introducing the reactant when the first piston is in a selected position, or it may include opening an intake valve (*e.g*., by rotating a camshaft or electronically triggering opening).

Triggering the chemical reaction may include triggering the chemical reaction when the first cylinder is in a selected position, for example by generating an energy discharge such as a spark, by thermal ignition, by chemical ignition, by exposure to a catalyst, by hypergolic injection, exposure to a particle beam , or by plasma injection, or may include holding the first piston substantially still during the chemical reaction (*e.g*., by applying a force to the first piston via the converter), in which case the first piston may be released when the chemical reaction is substantially complete. The chemical reaction may produce a reaction product, and converting mechanical energy of the first piston to electrical energy may include substantially adiabatically expanding the reaction product. The introduced reactant may include fuel (*e.g*., hydrocarbon fuel) or an oxidizer (*e.g*., oxygen, air), which may be introduced separately or mixed, or it may include a decomposing reactant. The method may further include exhausting a reaction product from the first cylinder.

The first converter may be connected to an energy management system, in which case converting the mechanical energy of the first piston to electrical energy may include transferring electrical energy to the energy management system, or applying electrical energy to the first converter may include drawing electrical energy from the energy management system. The energy management system may include an energy storage device (*e.g*., a battery, a capacitor, an inductor, or a mechanical energy storage device).

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE FIGURES

**FIG. 1** is a schematic of a crankshaft-free piston-cylinder assembly.
**FIG. 2** is a schematic of a piston-cylinder assembly coupled to a crankshaft.
**FIG. 3** is a schematic of a piston-cylinder assembly coupled to a homopolar generator.
**FIG. 4** illustrates the position of a piston in a cylinder during a four-stroke piston cycle.
**FIG. 5** is a schematic of a conventional engine retrofitted with an electromagnetic converter.
**FIG. 6** is a schematic of an embodiment of a double ended (or dual-ended) free piston-cylinder assembly of the claimed invention.
**FIG. 7** illustrates the position of a piston in an embodiment of a double-ended cylinder during a six-stroke piston cycle of the claimed invention.
**FIG. 8** illustrates the position of a piston in a double-ended cylinder during a six-stroke piston cycle.
**FIG. 9** illustrates the position of an asymmetrical piston in a double-ended cylinder during a four-stroke piston cycle.
**FIG. 10** illustrates the positions of two opposing pistons in a common cylinder in a four-stroke piston cycle.
**FIG. 11** illustrates the positions of two opposing pistons in a common cylinder in an eight-stroke piston cycle.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the claimed subject matter.

The term "valve," as used herein, includes any actuated flow controller or other actuated mechanism for selectively passing matter through an opening, including without limitation ball valves, plug valves, butterfly valves, choke valves, check valves, gate valves, leaf valves, piston valves, poppet valves, rotary valves, slide valves, solenoid valves, 2-way valves, or 3-way valves. Valves may be actuated by any method, including without limitation by mechanical, electrical, magnetic, camshaft-driven, hydraulic, or pneumatic means. "Valve timing" refers to any system of opening or closing valves in a specified temporal pattern relative to one another or to an engine component. For example, an intake valve may be configured to open before or during an intake stroke, and to close before a compression stroke.

The term "port," as used herein, includes any opening or set of openings (*e.g*., a porous foam) which may admit mass (solid, liquid, gas, or plasma) in one or more directions. Ports may be, but need not be, opened and closed via valves.

The term "bearing," as used herein, includes any part of a machine on which another part moves, slides, or rotates, including without limitation slide bearings, flexure bearings, ball bearings, roller bearings, gas bearings, or magnetic bearings.

The term "permanent magnet," as used herein, includes magnetizable materials that have been polarized to induce a persistent magnetic field. The term "permanent" should not be construed to require that a permanent magnet may not be demagnetized either intentionally or accidentally.

The term "armature," as used herein, includes any structure that interacts with a magnetic field via variable inductance or variable reluctance to do work (positive or negative) on the armature.

The term "reactant," as used herein, includes any material or combination of materials that can be induced to transform chemical potential energy to mechanical energy, for example to chemically react and drive a piston (typically by forming an expanding gas upon reaction). As used herein, a "fuel" is a particular type of reactant that reacts with an oxidizer to drive a piston. Fuels include, but are not limited to, hydrocarbon fuels such as gasoline, diesel, biodiesel, kerosene, propane, and butane, alcohol fuels such as ethanol, methanol, and butanol, and mixtures of any of the above. Other suitable reactants include decomposing reactants such as hydrazine (which may decompose to ammonia and nitrogen) or hydrogen peroxide (which may decompose to water and oxygen). The term "reaction products," as used herein, includes any material remaining after a reaction, including without limitation chemically reacted material, excess reactant which has not reacted or has only partially reacted, or any inert material which may be mixed with a reactant. A "substantially complete" reaction is one in which substantially all of at least one of the reactants has been consumed, or which has been substantially slowed or stopped by other factors such as changing temperature or pressure.

The term "carburetor," as used herein, includes a mechanism for mixing reactants (*e.g*., for mixing fuel and oxidizer) prior to their delivery to a cylinder.

The term "piston cycle," as used herein, includes any series of piston movements which begin and end with the piston in substantially the same configuration. In a four-stroke piston cycle, the cycle may include an intake stroke, a compression stroke, a power stroke, and an exhaust stroke. Additional or alternate strokes may form part of a piston cycle as described elsewhere herein. The term "operating frequency," as used herein, is the reciprocal of the time required to complete a single piston cycle. The term "frequency" should not be construed to limit piston operations to regular intervals.

The term "active material," as used herein, includes materials that may be induced to change their mechanical configuration by an applied environmental change, including without limitation piezoelectric, magnetostrictive, electrostrictive or shape-memory materials.

In general, terms used herein should be read to have their ordinary and common meanings as understood by one of ordinary skill in the art in view of the descriptions provided herein.

A variety of piston-cylinder assemblies are described herein for use in internal combustion engines, in which mechanical energy of a piston (*e.g*., kinetic energy of a piston) is converted to electrical energy. In some examples, these assemblies may be well-adapted to be installed in vehicles, for example in electric vehicles. In other examples, these assemblies may be appropriate for use in stationary or portable generators, which transform chemical energy into electrical energy (*e.g*., by burning a fuel).

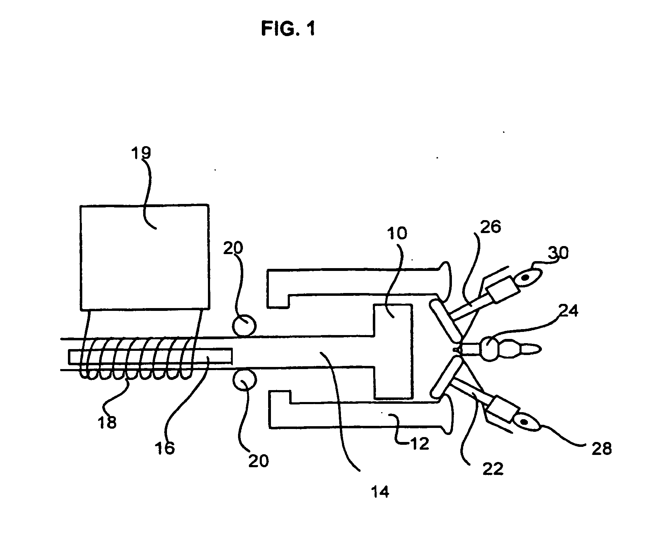

**FIG. 1** is a schematic of one example of a piston-cylinder assembly. Piston **10** is disposed in cylinder **12,** and has an elongated shaft **14** that extends out of the cylinder. The shaft **14** includes a permanent magnet **16,** which is positioned to slide through converter coil **18.** In the illustrated example, bearings **20** act to maintain alignment of piston **10.** (While roller bearings are illustrated in **FIG. 1****,** any suitable type of bearing may be used.) Intake valve **22** allows a fuel-oxidizer mixture to enter chamber when the valve **22** is opened and piston **10** is moved away from the closed end of cylinder **12** (the "intake stroke"). In the illustrated example, a simple valve structure is shown, but other examples may include fuel injectors or other devices for introducing a reactant into the cylinder. Motion of piston **10** away from the closed end of cylinder **12** may be driven by application of a voltage to converter coil **18,** which induces an electromotive force on the magnet **16.** The fuel-oxidizer mixture is compressed by motion of the piston **10,** which may be driven by applying a voltage to converter coil **18,** which induces an electromotive force on the magnet **16** to urge the piston **10** toward the closed end of cylinder **12** (the "compression stroke").

The compressed fuel-oxidizer is ignited by a spark from spark plug **24,** thereby driving the piston **10** away from the closed end of the cylinder **12.** As piston **10** moves away from the closed end of cylinder **12,** magnet **16** moves through converter coil **18,** inducing a voltage in the coil **18** (the "power stroke"). This voltage may be used to charge a battery, capacitor, or other energy management system as describe elsewhere herein. Once the power stroke is completed, piston **10** is moved toward the closed end of cylinder **12,** for example by applying a voltage to converter coil **18,** thereby inducing an electromotive force on magnet **16.** As piston **10** moves toward the closed end of cylinder **12,** reaction products from the reaction of the fuel and oxidizer are exhausted through exhaust valve **26** (the "exhaust stroke"). In the illustrated example, valves **22** and **26** are operated by cams **28** and **30,** respectively, but other valving systems may also be used as described elsewhere herein. If present, cams **28** and **30** may be driven by any convenient method, including by an electric activator such as a stepper motor or a torque motor.

In the illustrated example, the intake stroke, compression stroke, and exhaust stroke are all driven by the converter. In other examples, one or more of these strokes may be driven by other means, for example, by a crankshaft and flywheel, a spring (*e.g*., a mechanical spring or a gas spring), an active material component, or a power stroke of an opposed cylinder. Driving a piston "during" a stroke includes driving it for only a portion of its total travel during the stroke.

In the illustrated example, the operation of converter **18** is controlled by a controller **19,** which may be analog, digital, or computer-based. Controller **19** determines the sign and magnitude of energy transfer through converter **18** based on external inputs and on the present and past states of one or more of the piston **10,** cylinder **12,** valves **22** and **26,** and other engine components. These states may be inferred, for example, from measurement of the current through or voltage across the coils or active elements in the converter **18,** or may be measured by one or more sensors (not shown), which may detect, among other possible parameters, the position, velocity, or acceleration of the piston **10,** or the pressure, temperature, density, mass, or chemical makeup of any reactants in the cylinder **12.** These sensors may use electromagnetic, electrochemical, optical, electromechanical, or other means of sensing the relevant parameter. For example, a fixed coil and piston-mounted magnet separate from the converter may be used to sense the position and velocity of the piston, a piezoelectric sensor may be used to sense the pressure in the cylinder, and a fiber-optically coupled spectrometer may detect light from inside the cylinder to sense the state of combustion of fuel and oxidizer. Any of these sensor outputs may feed directly or indirectly into controller **19.** Controller **19** may also interface with an energy management system (not shown) as described elsewhere herein.

In the illustrated example, a fuel-oxidizer mixture is ignited by firing a spark plug **24** mounted at the head of cylinder **12.** In other examples, a different reactant or reaction trigger may be used. For example, instead of a spark plug, another type of electrical igniter, a thermal igniter (*e.g*., a glow plug), a chemical igniter (*e.g*., a squib), a photoigniter (*e.g*., a photochemical igniter, a photothermal igniter, a photoplasmic igniter, or a laser igniter), a catalyst, a hypergolic injection, a particle beam (*e.g*., an electron beam or an ion beam), or a plasma injection may trigger the chemical reaction. In other examples, the reaction trigger mechanism may be absent, and the reaction may be triggered by compression of the reactants as the piston **10** moves through the compression stroke. The reaction trigger may also be disposed in a different location, for example on a wall of cylinder **12** or on piston **10.** In the case of a powered reaction trigger (*e.g*., a spark plug or a plasma injection), in some examples power for the reaction trigger may be provided by the energy management system that stores power from the power stroke.

In the illustrated example, the introduced reactant is a fuel-oxidizer mixture. In other examples, other reactants, such as other suitable mixtures or decomposing reactants, may be used. In some examples, reactant(s) may be in condensed form (*e.g*., liquid or solid form). For example, the piston-cylinder assemblies described herein may be well-suited for use in an extraterrestrial vehicle (*e.g*., a moon buggy) or an underwater vehicle (*e.g*., a submarine or a torpedo), in which cases condensed reactants may be preferred (*e.g*., liquid fuel and liquid oxidizer). In some examples, liquid reactant(s) may be vaporized before reaction. When reactant(s) are in condensed form, the "compression stroke" may in some examples compress the reactant(s) by applying a compressive force without substantially changing reactant volume. In other examples, the "compression stroke" may simply reduce the volume of the reaction chamber, without substantially affecting the reactants within.

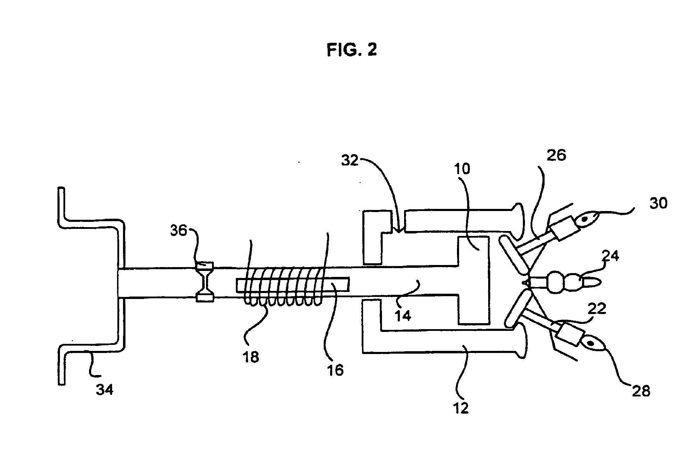

**FIG. 2** is a schematic of another example of a piston-cylinder assembly. As shown, piston **10** is slidably disposed in cylinder **12,** and includes magnet **16** which is interoperable with converter coil **18** to induce a voltage in converter coil **18** during the power stroke (for example, during all or a portion of the power stroke). Rather than the bearings 20 shown in **FIG. 1****,** cylinder **12** extends toward shaft **14** to provide a bearing surface. Optional port **32** prevents gas surrounding shaft **14** from being compressed and thereby retarding motion of piston **10** away from the closed end of cylinder **12.** In other examples (not shown), port **32** may be omitted, and gas surrounding shaft **14** may act as a gas spring assisting the compression and exhaust strokes. In the illustrated example, shaft **14** is coupled to crankshaft **34** via joint **36.** Crankshaft **34** may, for example, act to control piston timing or valve timing, may act to provide some or all of the driving force for at least one of the intake, compression, or exhaust strokes, or may convert at least a portion of the energy of the power stroke to mechanical energy (*e.g*., to drive a gear).

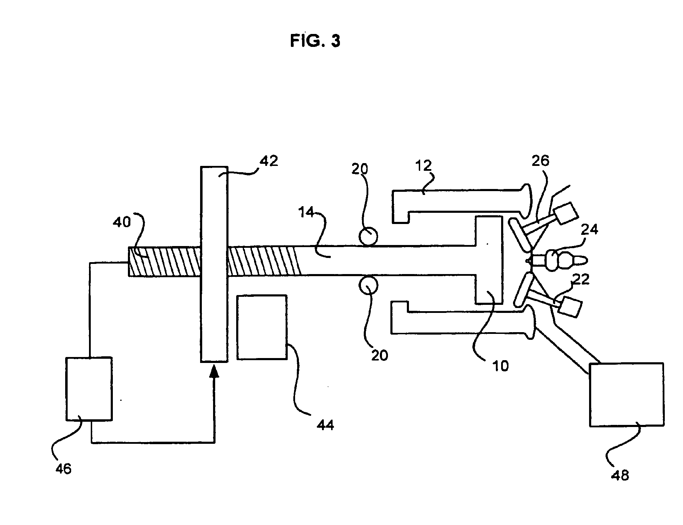

**FIG.** 3 is a schematic of still another example of a piston-cylinder assembly. In the illustrated example, piston **10** lacks the magnet **16** as shown in **FIG. 1** and **FIG. 2****.** Shaft **14** includes a helical thread **40** which is coupled to a conductive helical gear **42.** External magnet **44** (which may be a permanent magnet or an electromagnet) imposes a magnetic field upon gear **42.** When gear **42** turns in response to movement of shaft **14** during the power stroke, a voltage is generated between shaft **14** and the outside of gear **42** (that is, the gear and the magnet form a homopolar generator). Converter **46** may use this voltage to charge a battery, capacitor, or other power management system as disclosed elsewhere herein. During the intake, compression, and exhaust strokes, converter **46** may apply a voltage between shaft **14** and the outside of gear **42,** thereby inducing an electromotive force to turn gear **42** and drive piston **10.** Helical threads **40** may be of constant pitch (in which case the angular velocity of gear **42** will be proportional to the linear velocity of piston **10**), or may be of a variable pitch, so that the relation between angular velocity of gear **42** and linear velocity of piston **10** will depend on piston position. Those skilled in the art will recognize that other forms of linear-to-rotary conversion and other rotary electromagnetic converters may be substituted for the helical thread and homopolar converter illustrated in **FIG. 3****.** For example, a cylinder of non-circular cross section with a helical profile may be used with a non-circular piston that rotates as it travels through the cylinder, or the piston may include tilted vanes or other structures that induce it to rotate, or the piston may be rotated by magnetic forces.

The illustrated example also includes a carburetor **48** (shown schematically), which supplies a fuel-oxidizer mixture to intake valve **22.** Rather than the cams illustrated in **FIG. 1** and **FIG. 2****,** intake and exhaust valves **22** and **26** are electronically controlled. In some examples, control of the valves may be integrated with the energy management system described elsewhere herein, and power may be supplied to the valves by the energy management system.

**FIG. 1****-****FIG. 3** all show a spark plug **24** that ignites a fuel-oxidizer mixture (*e.g*., a fuel-air mixture). Other ignition sources may be substituted in any of the examples described herein, such as other electrical igniters, photoigniters, thermal igniters, chemical igniters, catalysts, hypergolic injections, particle beams, or plasma injections. In other examples, no ignition source may be required, and compression may be sufficient to initiate a reaction. In addition, the chemical reaction that drives the power stroke need not involve a fuel-oxidizer reaction, but may be any reaction that produces an expanding gas or other reaction product that will drive piston **10** in a power stroke (*e.g*., an energetic decomposition).

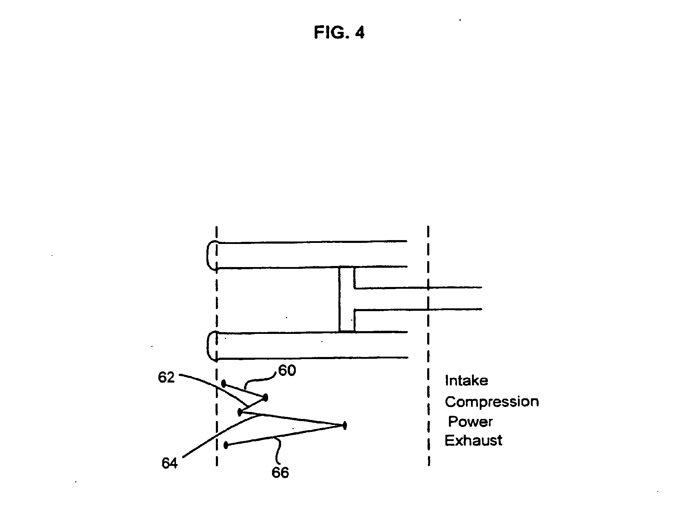

**FIG. 4** illustrates a four-stroke cycle for a piston engine. As shown, the piston travels away from the cylinder end for a relatively short distance during an intake stroke 60, in which at least one reactant is brought into the engine. In some examples, one or more reactants may be at or near ambient pressure, and may be drawn into the cylinder by a partial vacuum produced by the piston motion in the cylinder, while in other examples, the reactants may be injected or otherwise introduced into the piston, for example under pressure. Reactants may be supplied in any suitable form, including without limitation as a gas or as a liquid. The reactant(s) are then compressed by motion of the piston toward the cylinder end during compression stroke **62.** A chemical reaction is triggered in the compressed reactant(s), which drives the piston away in power stroke **64.** Finally, the piston returns to its original position in exhaust stroke **66,** exhausting some or all of any reaction products from the cylinder.

In **FIG. 4** and other Figures herein, piston motions are represented schematically as constant-velocity segments with abrupt velocity changes. Actual piston motions will in general involve more complex velocity profiles, exhibiting continuously-changing velocities and finite accelerations. An advantage of some of the electromagnetic power conversion systems described herein is that the coupling between the piston and the converter may be varied to optimize the velocity or acceleration at any point in the cycle, for example, to limit converter current, to control vibration, or to limit peak loads on the engine structure.

In the illustrated example, power stroke **64** is substantially longer than intake stroke **60.** A long power stroke may be more thermodynamically efficient for many engines, but has not typically been used in crankshaft engines, at least in part because it may require a larger crankshaft assembly, whose parasitic weight outstrips the increased efficiency of the long power stroke. Unequal strokes may be also achieved mechanically, for example by using cam-and-roller or other mechanisms to couple piston motion to a shaft and flywheel, but such engines have typically been found to be heavy and complex as compared to crankshaft engines. In some examples, drawing power from the engine electromechanically may allow the engine to use a longer power stroke, or a power stroke having a different length from the intake stroke, without resort to cumbersome mechanical systems.

In examples where stroke length is not fixed by connection to other components such as a crankshaft, the engines shown herein may easily be operated at variable compression ratios. When intake stroke **60** and compression stroke **62** are electromagnetically driven, reaction may be commenced at any virtually any desired compression ratio or piston displacement by selection of appropriate stroke lengths. The compression ratio or piston displacement may be dynamically controlled for each piston cycle, for example based on factors such as current or predicted engine load, fuel type, fuel concentration, fuel-oxidizer ratio, pressure, or temperature. U.S. Patent Nos. 4,104,995; 4,112,826; 4,182,288; 4,270,495; 4,517,931; 6,779,495; and 7,185,615, all of which are incorporated herein by reference, describe a variety of mechanical means for varying piston displacement or compression ratio. Similar effects may be achieved in a much simpler system by electromagnetically controlling piston position over time during each piston cycle.

In addition, piston motion during reaction may be minutely controlled to a degree not practical with most crankshaft engines. For example, in some examples, it may be desirable to hold piston **10** substantially stationary relative to cylinder **12** until reaction is substantially complete (isochoric reaction). Power stroke **64** may then be controlled in a configuration that optimizes power generation or that is otherwise desirable for a particular engine example. For example, in some examples, power stroke **64** may be substantially isothermal or substantially adiabatic. Further, it is readily feasible either to fully exhaust cylinder **12** by driving piston **10** to its full extent in exhaust stroke **66,** or to intentionally leave some reaction products in cylinder **12** by driving piston **10** through only a part of its range (*e.g*., to leave a portion of the exhaust in the cylinder when reactants are not fully reacted during power stroke **64,** allowing a portion of the unreacted reactants a "second chance" before they are exhausted). The length and timing of each of the four strokes of the piston cycle may be varied dynamically and independently to optimize the engine performance under varying conditions of speed, load, reactant composition, temperature, etc.

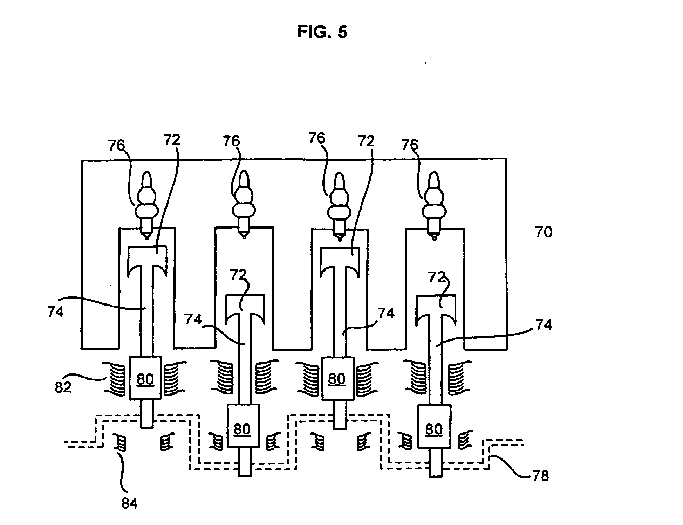

**FIG. 5** is a schematic of a conventional engine which has been retrofitted for use with an electromagnetic converter. Before retrofitting, the engine includes a block **70,** four piston heads **72,** each having an associated rod or shaft **74** (the piston head **72** and shaft **74** together forming the piston), four spark plugs **76,** and a crankshaft **78.** (For simplicity of illustration, fuel intakes and exhausts are not shown in **FIG. 5****.)** To retrofit, crankshaft **78** is removed, and each piston shaft **74** has a magnetic element **80** placed at the base of the shaft, near the former connection to crankshaft **78.** In the illustrated example, two pickup coils **82** and **84** for each piston shaft **74** have been placed above and at the former axis of crankshaft **78.** For each piston, coils **82** and **84** act together as at least a component of a converter to apply a driving force to their associated pistons during intake, compression, and exhaust strokes, and to convert mechanical energy of their associated pistons to electrical energy during their power strokes, as described in connection with **FIG. 4** and elsewhere herein. In some examples, the converters may be electrically coupled to a switching circuit that operates to switch coils **82** and **84** for operation during different portions of the engine cycle, while in other examples, each converter may have its own switching circuit. In either case, energy from each converter may either be stored in its own associated energy management system (described elsewhere herein), or may be pooled in a common energy management system. In some examples, a single coil may be provided for each piston shaft **74,** instead of the two coils **82** and **84.**

In some examples, crankshaft **78** may be retained, in which case a different arrangement of magnetic fields and converter coils or other variable inductance or variable reluctance circuits that convert mechanical energy of the pistons to and from electrical energy may be preferred, although the arrangement illustrated in **FIG. 5** may still be used. If crankshaft **78** is retained, it serves to maintain synchronous operation of the pistons. If crankshaft **78** is removed, the pistons may be operated synchronously or asynchronously, and piston timing may be controlled by operation of the converter(s). In some examples, a hybrid system many be used, in which electromagnetic converters are installed on only a subset of pistons. In such examples, it may in some cases be preferable to retain crankshaft **78** to synchronize the pistons, while in other cases, other mechanical coupling systems may be preferable. The crankshaft **78,** or a portion thereof, may be retained to drive auxiliary devices such as water pumps, oil pumps, fuel pumps, fans, or compressors, or such auxiliary devices may be powered from the converter, for example via an energy management system as described elsewhere herein.

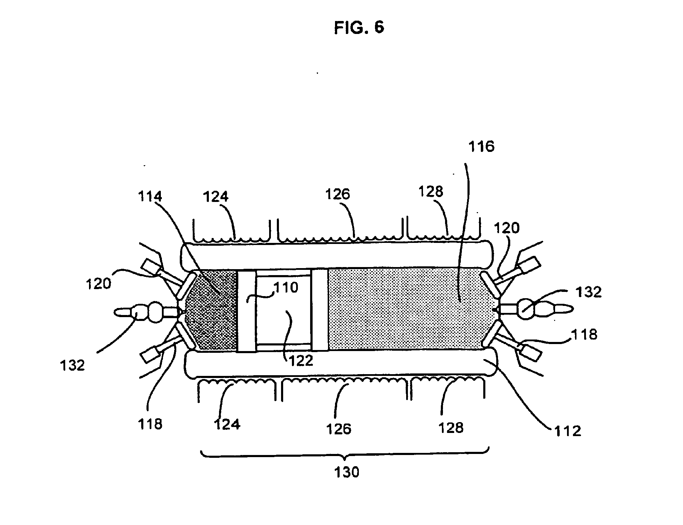

**FIG.** 6 is a schematic of an embodiment of the claimed invention in the form of a free-piston engine. Piston **110** is slidably disposed in cylinder **112,** which has two end chambers **114** and **116.** In the illustrated embodiment, each end includes an intake valve **118** and an exhaust valve **120,** which are configured to admit reactants and to expel reaction product, respectively. Piston **110** includes a magnetic element **122,** which may be an electromagnet, a permanent magnet, or a magnetically susceptible material such as an iron core. Piston **110** can be driven in either direction by application of a voltage to converter coils **124, 126,** and **128,** which together form a converter **130.** In addition, the converter **130** is configured to convert mechanical energy of piston **110** to electrical energy. This energy may be stored, for example, in a battery, capacitor, or other energy management system (not shown). The illustrated embodiment includes spark plugs **132,** but other ignition sources may be used such as those described elsewhere herein, or the engine may be operated without an ignition source using reactants that spontaneously react in end chambers **114** and **116.**

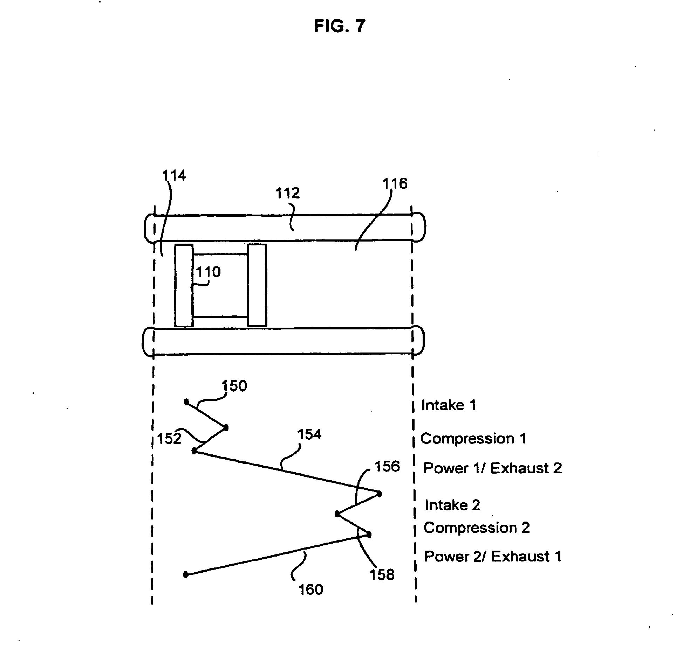

**FIG. 7** illustrates a method of operating an embodiment of a free-piston engine such as the one shown in **FIG. 6** using a six-stroke cycle. Converter **130** operates to drive piston **110** away from end chamber **114,** drawing reactants (*e.g*., a fuel-oxidizer mixture) into chamber **114,** as an intake stroke **150** for chamber **114.** Converter **130** then operates to drive piston **110** toward end chamber **114** as a compression stroke **152,** compressing the reactants in chamber **114.** A reaction between the reactants is then initiated (*e.g*., by a spark plug), driving the piston away from chamber **114.** During this power stroke **154,** the piston travels to the other end of cylinder **112,** exhausting any reaction products in end chamber **116.** Converter **130** draws power from the piston during power stroke **154,** which may be stored in an energy management system as described elsewhere herein. Converter **130** then drives piston **110** away from end chamber **116,** drawing reactants into chamber **116** as an intake stroke **156.** (In some embodiments, the reactants so drawn into chamber **116** may differ from those drawn into chamber **114** during intake stroke **150** in composition, proportions, temperature, or other properties, while in other embodiments, they may be substantially similar) Converter **130** then operates to drive piston **110** toward end chamber **116** as a compression stroke **158,** compressing the reactants in chamber **116.** A reaction between the reactants is then initiated, driving the piston away from chamber **116** as power stroke **160.** Converter **130** converts mechanical energy of piston **110** to electrical energy during power stroke **160.** In addition, any reaction products remaining in end chamber **114** are exhausted by power stroke **160.** The six-stroke cycle may then be repeated.

It will be seen that the six-stroke cycle shown in **FIG. 7** can be represented as two overlapping four-stroke cycles, where the power stroke on one side of the cylinder overlaps with the exhaust stroke on the other side of the cylinder. As discussed above in connection with **FIG. 4****,** it may be thermodynamically favorable for an engine to use a relatively long power stroke. In the embodiment illustrated in **FIG.** 7, the power strokes are substantially longer than the intake or compression strokes, allowing the engine to take advantage of a long cylinder during the power stroke without requiring a long piston travel during the strokes driven by the converter **130.** In other embodiments, all strokes may be of similar length.

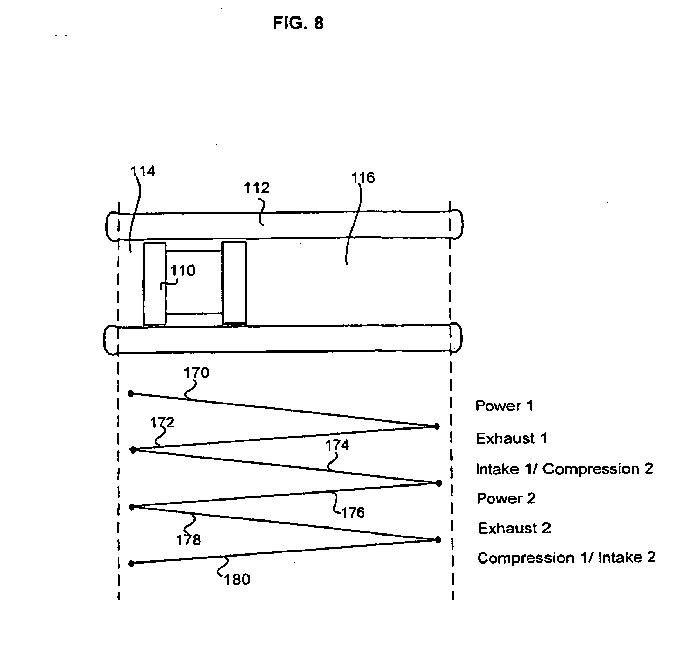

**FIG. 8** shows a different engine cycle. As shown, reactants in chamber **114** are reacted to drive power stroke **170** as piston **110** moves away from chamber **114,** and converter **130** converts mechanical energy of power stroke **170** to electrical energy, which may be stored in an energy management system. Converter **130** then drives the piston toward chamber **114** in exhaust stroke **172,** exhausting reaction products from chamber **114.** Converter **130** drives the piston away from chamber **114** in intake/compression stroke **174,** which draws reactants into chamber **114** and compresses reactants already in chamber **116.** The reactants in chamber **116** are reacted to drive power stroke **176** as piston **110** moves away from chamber **116** (compressing the reactants in chamber **114** without reaction), and converter **130** converts mechanical energy of the power stroke **176** to electrical energy, which may be stored in an energy management system. Converter **130** then drives piston **110** toward chamber **116** in exhaust stroke **178,** exhausting reaction products from chamber **116** (and decompressing the reactants that were incidentally compressed during power stroke **176**). Finally, converter **130** drives piston **110** toward chamber **114** in compression/intake stroke **180,** compressing the reactants in chamber **114** and drawing reactants into chamber **116.** The cycle may then be repeated. Those of ordinary skill in the art will recognize that the six-stroke cycle shown in **FIG.** 8 can be represented as two overlapping four-stroke cycles, where the intake stroke on one side of the cylinder overlaps with the compression stroke on the other side of the cylinder.

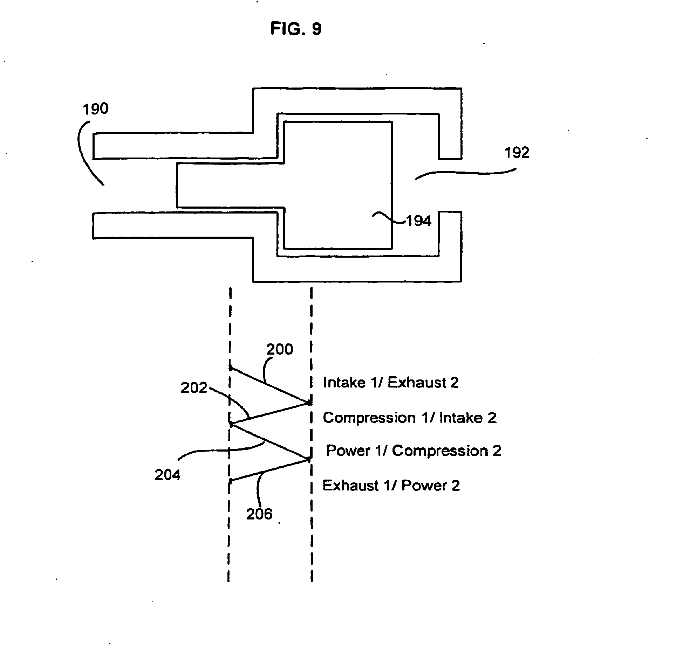

**FIG.** 9 illustrates yet another engine cycle for a free-piston engine. The illustrated engine is physically asymmetric, with chamber **190** having a narrower diameter than chamber **192,** and piston **194** having a corresponding step in diameter. Either of the cycles described in connection with **FIG. 7** and **FIG. 8** may also be used with a physically asymmetric engine such as the one shown in **FIG. 9****,** or the cycle illustrated in **FIG. 9** may be used with a physically symmetric engine such as the one illustrated in **FIG. 6****.** As shown, converter **130** drives piston **194** toward chamber **192,** drawing reactants into chamber **190** and exhausting reaction products from chamber **192** in intake/exhaust stroke **200.** Converter **130** then drives piston **194** toward chamber **190,** compressing reactants in chamber **190** and drawing reactants into chamber **192** in compression/intake stroke **202.** The compressed reactants in chamber **190** are then reacted, driving piston **194** away from chamber **190** and compressing the reactants in chamber **192** in power/compression stroke **204.** Finally, the compressed reactants in chamber **192** are reacted, driving piston **194** away from chamber **192** and exhausting reaction products from chamber **190** in exhaust/power stroke **206.** During strokes **204** and **206,** converter **130** converts mechanical energy of piston **194** to electrical energy. This asymmetric four-stroke cycle can be represented as two offset overlapping four-stroke cycles for the two separate chambers **190** and **192.**

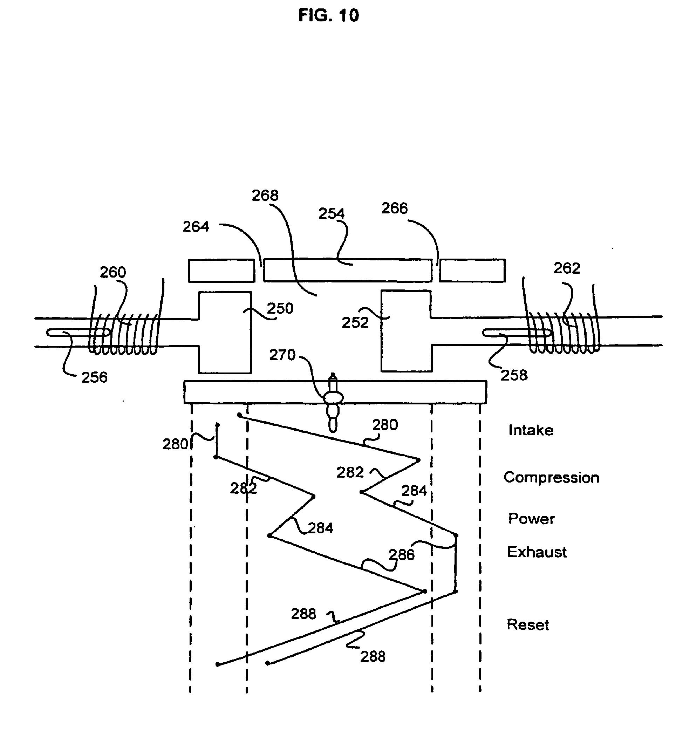

**FIG. 10** illustrates an opposed-piston engine and a corresponding engine cycle. In the depicted engine, two opposed pistons **250** and **252** are slidably disposed in cylinder **254.** The pistons include magnet elements **256** and **258,** which are operably linked to corresponding converter coils **260** and **262,** respectively. Converter coils **260** and **262** may be electrically coupled to form a common converter, or they may be operated separately as segments of two independent converters. In the example shown, coils **260** and **262** both form parts of a common converter (not shown). Cylinder **254** includes intake port **264** and exhaust port **266.** In the illustrated example, these ports **264** and **266** are simple openings, which may be closed when they are occluded by the movement of pistons **250** and **252** respectively. In other examples, ports **264** and **266** may include valves.

In use, converter coil **260** first holds piston **250** in a substantially fixed position with intake port **264** open, while converter coil **262** is driven to draw piston **252** away from piston **250,** while maintaining occlusion of exhaust port **266,** thereby drawing reactants through intake port **264** into chamber **268** in cylinder **254,** in intake stroke **280.** Converter coils **260** and **262** are then driven to move pistons **250** and **252** together, occluding both ports **264** and **266** and compressing reactants in chamber **268,** in compression stroke **282.** Reaction trigger **270** (in the illustrated example, a spark plug) triggers a reaction in the compressed reactants, driving pistons **250** and **252** away from one another in power stroke **284.** Converter coils **260** and **262** convert mechanical energy of pistons **250** and **252,** respectively, into electrical energy, and also control the positions of pistons **250** and **252** so that piston **250** continues to occlude intake port **264** while piston **252** moves to open exhaust port **266.** Piston **252** is then held substantially still by converter coil **262** while piston **250** is moved toward piston **252** by converter coil **260,** thereby exhausting reaction products from chamber **268** through exhaust port **266** in exhaust stroke **286.** Finally, both pistons **250** and **252** are moved together to occlude exhaust port **266** and to open intake port **264** in reset stroke **288.** The cycle may then be repeated.

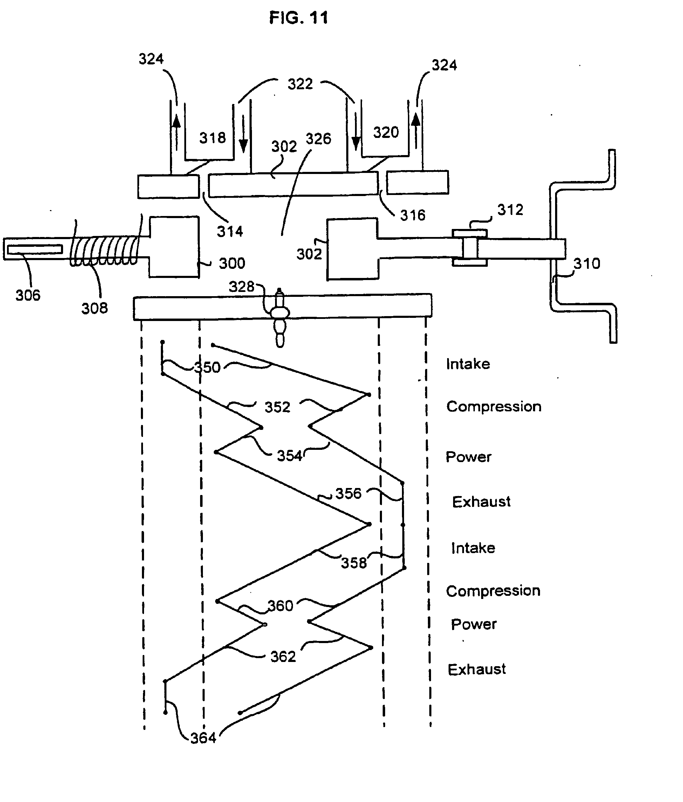

**FIG. 11** is a schematic of another opposed-piston engine and an alternative engine cycle. In the illustrated example, two opposed pistons **300** and **302** are slidably disposed in cylinder **304.** Piston **300** includes a magnet element **306,** which is operably linked to converter coil **308.** Piston **302** is mechanically coupled to a crankshaft **310** via joint **312.** Cylinder includes two ports **314** and **316,** which are coupled to valves **318** and **320,** respectively. Valves **318** and **320** each have two positions, allowing ports **314** and **316** to function either as intake ports when their corresponding valves **318** and **320** connect them to a reactant source **322,** or as exhaust ports when their corresponding valves **318** and **320** connect them to an exhaust path **324.** A reaction chamber **326** is defined between piston **300** and piston **302.**

In the illustrated engine cycle, valves **318** and **320** are first set so that port **314** is connected to a reactant source **322** and port **316** is connected to exhaust path **324.** The first four strokes of the engine correspond to strokes **280, 282, 284,** and **286** as shown in **FIG. 10****,** while the next four strokes correspond to a mirror image of strokes **280, 282, 284,** and **286.** In intake stroke **350,** piston **300** is held substantially in place by converter coil **308** in a position that leaves port **314** open, while crankshaft **310** draws piston **302** away from piston **300,** drawing reactants through port **314** into chamber **326** while continuing to occlude port **316.** Pistons **300** and **302** are then moved together by converter coil **308** and crankshaft **310,** respectively, compressing the reactants and occluding ports **314** and **316** in compression stroke **352.** A reaction is initiated between the reactants, for example by discharging spark plug **328.** The reaction drives pistons **300** and **302** apart, transferring mechanical energy from piston **302** to crankshaft **310** and allowing converter coil **308** to convert mechanical energy of piston **300** to electrical energy in power stroke **354.** Piston **300** is not allowed to open port **314,** while piston **302** moves far enough to open port **316.** Converter coil 308 **then** drives piston **300** toward piston **302** in exhaust stroke **356,** allowing reaction products to exhaust through port **316,** while piston **302** remains in a substantially fixed position.

After exhaust stroke **356,** valves **318** and **320** are reset so that port **314** is connected to exhaust path **324** and port **316** is connected to reactant source **322.** While piston **302** remains in a position holding port **316** open, piston **300** is drawn back by converter coil **308** to draw reactants into chamber **326** through port **316** in intake stroke **358.** Both pistons **300** and **302** then are moved toward one another by converter coil **308** and crankshaft **310,** respectively, occluding both ports **314** and **316** and compressing reactants in chamber **326** for compression stroke **360.** A chemical reaction between the reactants is triggered, moving pistons **300** and **302** apart, transferring mechanical energy from piston **302** to crankshaft **310** and allowing converter coil **308** to convert mechanical energy of piston **300** to electrical energy in power stroke **362.** Piston **302** is not allowed to open port **316,** while piston **300** moves far enough to open port **314.** Crankshaft **310** then drives piston **302** toward piston **300** in exhaust stroke **364,** allowing reaction products to exhaust through port **314,** while piston 300 remains in a substantially fixed position. After exhaust stroke **364,** valves **318** and **320** are reset so that port **314** is connected to reactant source **322** and port **316** is connected to exhaust path **324,** and the cycle may be repeated.

In some of the examples described herein which include crankshafts, an attached piston may move in a more complicated pattern than a regular fixed-length stroke. Such movement may generally be achieved by means such as eccentric crankshafts, crankshafts which reverse direction or change speed, or active connections between piston and crankshaft which change their relative positions (*e.g*., by use of active material elements). Alternatively, crankshafts may be replaced by alternative mechanical coupling devices such as cam-and-track or swashplate mechanisms, some of which can produce arbitrarily complex patterns of motion at one or more pistons.

Embodiments depicted in the Figures include magnets that move through substantially stationary coils, magnets that move outside substantially stationary coils, and conductors that move through a substantially stationary magnetic field. It will be understood that each of these configurations may be used in conjunction with other piston-cylinder arrangements, such as those depicted in the Figures or described in the text. In addition, those of ordinary skill in the art will recognize that other arrangements of conductors, magnetic materials, and magnetic fields may be used to convert mechanical energy to or from electrical energy in an engine. For example, Type I superconducting materials expel magnetic fields (the Meissner effect), so that a moving Type I superconductor can change the flux in a magnetic circuit, inducing currents in a converter coil. Type II superconducting materials trap magnetic fields, and may thus be used in place of permanent magnets or electromagnets in a converter, while providing additional unique characteristics, *e.g*., functioning as passively-stable magnetic bearings. In general, energy may be transferred to and from the piston by any variable reluctance or variable inductance magnetic circuit.

In some embodiments, engines include permanent magnets or electromagnets. In either case, the engine may include thermal shielding, insulation, or other thermal control apparatus (*e.g*., a cooling system) that functions to maintain temperatures of selected engine components within a desired range. In particular, a thermal control system may act to maintain a magnetic material below its Curie temperature.

The Figures depict several different configurations of single or dual pistons in cylinders. In some examples, an engine may include a plurality of cylinders, which may be of the same or of different types. Pistons in different cylinders may operate independently, or may be operatively coupled (*e.g*., mechanically coupled as by connection to a common crankshaft). In particular, an engine may include control electronics that select whether to operate a piston, and which piston to operate, in response to a determined actual or predicted operating condition (*e.g*., incline of the engine or of a vehicle powered by the engine, temperature, current draw, speed, acceleration, braking, load such as gross vehicle weight, fuel composition, engine emissions, power, local rules such as emissions limits, or engine settings). For example, when power draw is relatively heavy, the control electronics may run pistons more frequently or run more cylinders. When power draw is relatively light, the control electronics may run fewer pistons, including not running a piston at all.

In embodiments in which the pistons are not coupled to one another in a configuration that maintains their relative phase (*e.g*., via connection to a common crankshaft), they may be operated synchronously or asynchronously. As used herein in connection with piston timing, the term "asynchronous" means that the cylinders are operated with at least one stroke having a different duration or velocity profile from cylinder to cylinder, so that a constant phase relationship is not maintained between substantially simultaneous piston cycles. Examples of asynchronous piston operation include operating two pistons at different cycle frequencies or operating one piston while leaving another substantially stationary.

In each of the illustrated embodiments, a converter (which may include coils or another variable reluctance or variable inductance circuit) is connected to an energy management system. The energy management system operates as an energy source and sink, drawing power from the piston during the power stroke and returning power to the piston during other strokes. Power conversion systems that can accept power inputs of variable length or amplitude and convert them to supply a substantially constant voltage are described, for example in U.S. Patent No. 4,399,499, which is incorporated herein by reference. Such conversion systems may be used to condition power intake from the engine to make it more useful for other purposes, such as for driving a vehicle. The energy management system may also accept power inputs from other sources, for example from regenerative braking systems. The energy management system may store power in an energy storage device such as a battery or a capacitor (including a supercapacitor, ultracapacitor, or hypercapacitor). U.S. Patent No. 6,590,360, which is incorporated herein by reference, describes a switching circuit designed to transfer energy in both directions between a battery and a motor/generator that may be used for this purpose. In some embodiments, the energy management system may also power auxiliary devices such as water pumps, oil pumps, fuel pumps, fans, or compressors.

It will be understood by those within the art that, in general, terms used herein, and especially in the appended claims are generally intended as "open" terms (*e.g*., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of introductory phrases such as "at least one" or "one or more" to introduce claim recitations. However, the use of such phrases should not be construed to imply that the introduction ofa claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" *(e.g.,* "a cylinder" should typically be interpreted to mean "at least one cylinder"); the same holds true for the use of definite articles used to introduce claim recitations. In addition, even if a specific number of an introduced claim recitation is explicitly recited, those skilled in the art will recognize that such recitation should typically be interpreted to mean *at least* the recited number (*e.g*., the bare recitation of "two cylinders," or "a plurality of cylinders," without other modifiers, typically means *at least* two cylinders). Furthermore, in those instances where a phrase such as "at least one of A, B, and C," "at least one of A, B, or C," or "an [item] selected from the group consisting of A, B, and C," is used, in general such a construction is intended in the sense one having skill in the art would understand the convention (*e.g*., any of these phrases would include but not be limited to systems that have A alone, B alone, C alone, A and B together, A and C together, B and C together, and/or A, B, and C together). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration.

## Claims

1. An internal combustion engine, comprising:
a first piston (110) slidably disposed in a first cylinder (112), the first cylinder having a first closed end (114) and a second closed end (116);
a first port (118) disposed proximate to the first closed end of the first cylinder and configured to admit a first reactant to the first closed end of the first cylinder and a second port (118) disposed proximate to the second closed end of the first cylinder and configured to admit a second reactant to the second closed end of the first cylinder; and
a first converter (130) operable with the first piston to convert mechanical energy of the first piston from and to electrical energy within each piston cycle of repeated piston cycles, wherein the first converter is configured, in a said piston cycle,
to drive the first piston during a first intake stroke in which the first piston moves away from the first closed end of the first cylinder and a first reactant is introduced into the first closed end of the first cylinder,
to drive the first piston during a first compression stroke in which the first reactant is compressed in the first closed end of the first cylinder,
to convert mechanical energy of the first piston to electrical energy during a first power/exhaust stroke in which the first piston moves away from the first closed end of the first cylinder in response to a chemical reaction in the first closed end of the first cylinder, thereby at least partially exhausting a reaction product in the second closed end of the first cylinder,
to drive the first piston during a second intake stroke in which the first piston moves away from the second closed end of the first cylinder and the second reactant is introduced into the second closed end of the first cylinder,
to drive the first piston during a second compression stroke in which a second reactant is compressed in the second closed end of the first cylinder, and
to convert mechanical energy of the first piston to electrical energy during a second power/exhaust stroke in which the first piston moves away from the second closed end of the first cylinder in response to a chemical reaction in the second closed end of the first cylinder, thereby at least partially exhausting a reaction product in the first closed end of the first cylinder.

2. The engine of claim 1, further comprising an energy management system electrically coupled to the first converter, wherein the energy management system comprises an energy storage device to form an energy source and sink for drawing power from the piston during the power stroke of the piston cycle and returning power to the piston during at least one stroke of the piston cycle.

3. The engine of any one of the preceding claims, wherein the first converter comprises a variable reluctance and/or variable inductance magnetic circuit and the first piston includes an armature configured to interact with the variable reluctance and/or variable inductance magnetic circuit.

4. The engine of claim 1, further comprising a reaction trigger (132), the reaction trigger being configured to initiate a chemical reaction in a reactant disposed between the first piston and the closed end of the first cylinder.

5. The engine of any one of the preceding claims, further comprising a third port (120) configured to allow a reaction product to escape from the first closed end of the first cylinder.

6. The engine of claim 5, wherein the first port includes an intake valve and wherein the third port includes an exhaust valve.

7. The engine of any one of claims 1 to 4, wherein the first port is configured to allow a reaction product to escape from the first closed end of the first cylinder, the engine further comprising a valve configured to switch the first port from connection with an intake path to connection with an exhaust path.

8. The engine of any one of the preceding claims in which the power strokes are longer than the intake strokes.

9. A method of operating an internal combustion engine including a first piston (110) slidably disposed in a first cylinder (112), the first cylinder having a first closed end (114) and a second closed end (116), a first port (118) disposed proximate to the first closed end of the first cylinder and configured to admit a first reactant to the first closed end of first cylinder and a second port (118) is disposed proximate to the second closed end of the cylinder and configured to admit a second reactant to the second closed end of first cylinder, and a first converter (130) operable with the first piston to convert mechanical energy of the first piston from and to electrical energy, the method comprising in each piston cycle of repeated piston cycles.
the first converter driving the first piston during a first intake stroke in which the first piston moves away from the first closed end of the first cylinder and a first reactant is introduced into the first closed end of the first cylinder,
the first converter driving the first piston during a first compression stroke in which the first reactant is compressed in the first closed end of the first cylinder,
the first converter converting mechanical energy of the first piston to electrical energy during a first power/exhaust stroke in which the first piston moves away from the first closed end of the first cylinder in response to a chemical reaction in the first closed end of the first cylinder, thereby exhausting a reaction product in the second closed end of the first cylinder,
the first converter driving the first piston during a second intake stroke in which the first piston moves away from the second closed end of the first cylinder and the second reactant is introduced into the second closed end of the first cylinder,
the first converter driving the first piston during a second compression stroke in which a second reactant is compressed in the second closed end of the first cylinder, and
the first converter converting mechanical energy of the first piston to electrical energy during a second power stroke in which the first piston moves away from the second closed end of the first cylinder in response to a chemical reaction in the second closed end of the first cylinder, thereby at least partially exhausting a reaction product in the first closed end of the first cylinder.

10. The method of claim 9, wherein the power strokes are longer than the intake strokes.

## Patentansprüche

1. Verbrennungsmotor, der Folgendes umfasst:
einen ersten Kolben (110), der in einem ersten Zylinder (112) verschiebbar angeordnet ist, wobei der erste Zylinder ein erstes geschlossenes Ende (114) und ein zweites geschlossenes Ende (116) aufweist;
einen ersten Kanal (118), der in der Nähe des ersten geschlossenen Endes des ersten Zylinders angeordnet ist und dahingehend konfiguriert ist, ein erstes Reaktionsmittel in das erste geschlossene Ende des ersten Zylinders einzulassen, und einen zweiten Kanal (118), der in der Nähe des zweiten geschlossenen Endes des ersten Zylinders angeordnet ist und dahingehend konfiguriert ist, ein zweites Reaktionsmittel in das zweite geschlossene Ende des ersten Zylinders einzulassen; und
einen ersten Wandler (130), der mit dem ersten Kolben dazu betrieben werden kann, in jedem Kolbenzyklus wiederholter Kolbenzyklen mechanische Energie des ersten Kolbens in elektrische Energie oder aus elektrischer Energie umzuwandeln, wobei der erste Wandler dahingehend konfiguriert ist, in einem solchen Kolbenzyklus
während eines ersten Einlasshubs, bei dem sich der erste Kolben vom ersten geschlossenen Ende des ersten Zylinders weg bewegt und ein erstes Reaktionsmittel in das erste geschlossene Ende des ersten Zylinders eingeleitet wird, den ersten Kolben anzutreiben,
während eines ersten Verdichtungshubs, bei dem das erste Reaktionsmittel im ersten geschlossenen Ende des ersten Zylinders verdichtet wird, den ersten Kolben anzutreiben,
während eines ersten Arbeits-/Auslasshubs, bei dem sich der erste Kolben als Reaktion auf eine chemische Reaktion im ersten geschlossenen Ende des ersten Zylinders vom ersten geschlossenen Ende des ersten Zylinders weg bewegt, wodurch ein Reaktionsprodukt im zweiten geschlossenen Ende des ersten Zylinders zumindest teilweise abgelassen wird, mechanische Energie des ersten Kolbens in elektrische Energie umzuwandeln,
während eines zweiten Einlasshubs, bei dem sich der erste Kolben vom zweiten geschlossenen Ende des ersten Zylinders weg bewegt und ein zweites Reaktionsmittel in das zweite geschlossene Ende des ersten Zylinders eingeleitet wird, den ersten Kolben anzutreiben,
während eines zweiten Verdichtungshubs, bei dem ein zweites Reaktionsmittel im zweiten geschlossenen Ende des ersten Zylinders verdichtet wird, den ersten Kolben anzutreiben, und
während eines zweiten Arbeits-/Auslasshubs, bei dem sich der erste Kolben als Reaktion auf eine chemische Reaktion im zweiten geschlossenen Ende des ersten Zylinders vom zweiten geschlossenen Ende des ersten Zylinders weg bewegt, wodurch ein Reaktionsprodukt im ersten geschlossenen Ende des ersten Zylinders zumindest teilweise abgelassen wird, mechanische Energie des ersten Kolbens in elektrische Energie umzuwandeln.

2. Motor nach Anspruch 1, der ferner ein mit dem ersten Wandler elektrisch gekoppeltes Energiemanagementsystem umfasst, wobei das Energiemanagementsystem eine Energiespeichervorrichtung als Energiequelle und -senke zum Beziehen von Kraft vom Kolben während des Arbeitshubs des Kolbenzyklus und Rückführen von Kraft zum Kolben während mindestens eines Hubs des Kolbenzyklus umfasst.

3. Motor nach einem der vorhergehenden Ansprüche, wobei der erste Wandler einen Magnetkreis mit variabler Reluktanz und/oder variabler Induktanz umfasst und der erste Kolben einen Anker enthält, der dahingehend konfiguriert ist, mit dem Magnetkreis mit variabler Reluktanz und/oder variabler Induktanz zusammenzuwirken.

4. Motor nach Anspruch 1, der ferner einen Reaktionsauslöser (132) umfasst, wobei der Reaktionsauslöser dahingehend konfiguriert ist, eine chemische Reaktion in einem zwischen dem ersten Kolben und dem geschlossenen Ende des ersten Zylinders angeordneten Reaktionsmittel einzuleiten.

5. Motor nach einem der vorhergehenden Ansprüche, der ferner einen dritten Kanal (120) umfasst, der dahingehend konfiguriert ist, ein Entweichen des Reaktionsprodukts aus dem ersten geschlossenen Ende des ersten Zylinders zu gestatten.

6. Motor nach Anspruch 5, wobei der erste Kanal ein Einlassventil enthält und wobei der dritte Kanal ein Auslassventil enthält.

7. Motor nach einem der Ansprüche 1 bis 4, wobei der erste Kanal dahingehend konfiguriert ist, ein Entweichen eines Reaktionsprodukts aus dem ersten geschlossenen Ende des ersten Zylinders zu gestatten, wobei der Motor ferner ein Ventil umfasst, das dahingehend konfiguriert ist, von einer Verbindung des ersten Kanals mit einem Einlassweg zu einer Verbindung des ersten Kanals mit einem Auslassweg zu wechseln.

8. Motor nach einem der vorhergehenden Ansprüche, bei dem die Arbeitshübe länger als die Einlasshübe sind.

9. Verfahren zum Betreiben eines Verbrennungsmotors, der einen ersten Kolben (110), der in einem ersten Zylinder (112) verschiebbar angeordnet ist, wobei der erste Zylinder ein erstes geschlossenes Ende (114) und ein zweites geschlossenes Ende (116) aufweist, einen ersten Kanal (118), der in der Nähe des ersten geschlossenen Endes des ersten Zylinders angeordnet ist und dahingehend konfiguriert ist, ein erstes Reaktionsmittel in das erste geschlossene Ende des ersten Zylinders einzulassen, und einen zweiten Kanal (118), der in der Nähe des zweiten geschlossenen Endes des Zylinders angeordnet ist und dahingehend konfiguriert ist, ein zweites Reaktionsmittel in das zweite geschlossene Ende des ersten Zylinders einzulassen, und einen ersten Wandler (130), der mit dem ersten Kolben dazu betrieben werden kann, mechanische Energie des ersten Kolbens in elektrische Energie oder aus elektrischer Energie umzuwandeln, enthält, wobei das Verfahren in jedem Kolbenzyklus wiederholter Kolbenzyklen umfasst, dass
der erste Wandler während eines ersten Einlasshubs, bei dem sich der erste Kolben vom ersten geschlossenen Ende des ersten Zylinders weg bewegt und ein erstes Reaktionsmittel in das erste geschlossene Ende des ersten Zylinders eingeleitet wird, den ersten Kolben antreibt,
der erste Wandler während eines ersten Verdichtungshubs, bei dem das erste Reaktionsmittel im ersten geschlossenen Ende des ersten Zylinders verdichtet wird, den ersten Kolben antreibt,
der erste Wandler während eines ersten Arbeits-/Auslasshubs, bei dem sich der erste Kolben als Reaktion auf eine chemische Reaktion im ersten geschlossenen Ende des ersten Zylinders vom ersten geschlossenen Ende des ersten Zylinders weg bewegt, wodurch ein Reaktionsprodukt im zweiten geschlossenen Ende des ersten Zylinders abgelassen wird, mechanische Energie des ersten Kolbens in elektrische Energie umwandelt,
der erste Wandler während eines zweiten Einlasshubs, bei dem sich der erste Kolben vom zweiten geschlossenen Ende des ersten Zylinders weg bewegt und ein zweites Reaktionsmittel in das zweite geschlossene Ende des ersten Zylinders eingeleitet wird, den ersten Kolben antreibt,
der erste Wandler während eines zweiten Verdichtungshubs, bei dem ein zweites Reaktionsmittel im zweiten geschlossenen Ende des ersten Zylinders verdichtet wird, den ersten Kolben antreibt, und
der erste Wandler während eines zweiten Arbeitshubs, bei dem sich der erste Kolben als Reaktion auf eine chemische Reaktion im zweiten geschlossenen Ende des ersten Zylinders vom zweiten geschlossenen Ende des ersten Zylinders weg bewegt, wodurch ein Reaktionsprodukt im ersten geschlossenen Ende des ersten Zylinders zumindest teilweise abgelassen wird, mechanische Energie des ersten Kolbens in elektrische Energie umwandelt.

10. Verfahren nach Anspruch 9, wobei die Arbeitshübe länger als die Einlasshübe sind.

## Revendications

1. Moteur à combustion interne, comprenant :
un premier piston (110) disposé à coulissement dans un premier cylindre (112), le premier cylindre comportant une première extrémité fermée (114) et une seconde extrémité fermée (116) ;
un premier orifice (118) disposé à proximité de la première extrémité fermée du premier cylindre et configuré pour admettre un premier réactif dans la première extrémité fermée du premier cylindre et un deuxième orifice (118) disposé à proximité de la seconde extrémité fermée du premier cylindre et configuré pour admettre un second réactif dans la seconde extrémité fermée du premier cylindre ; et
un premier convertisseur (130) pouvant fonctionner avec le premier piston pour convertir une énergie mécanique du premier piston en énergie électrique et inversement dans chaque cycle de piston d'une pluralité de cycles de piston répétés, le premier convertisseur étant configuré, dans un dit cycle de piston,
pour entraîner le premier piston au cours d'une première course d'admission dans laquelle le premier piston s'éloigne de la première extrémité fermée du premier cylindre et un premier réactif est introduit dans la première extrémité fermée du premier cylindre,
pour entraîner le premier piston au cours d'une première course de compression dans laquelle le premier réactif est comprimé dans la première extrémité fermée du premier cylindre,
pour convertir une énergie mécanique du premier piston en énergie électrique au cours d'une première course de détente/échappement dans laquelle le premier piston s'éloigne de la première extrémité fermée du premier cylindre suite à une réaction chimique dans la première extrémité fermée du premier cylindre, évacuant ainsi au moins partiellement un produit de réaction dans la seconde extrémité fermée du premier cylindre,
pour entraîner le premier piston au cours d'une seconde course d'admission dans laquelle le premier piston s'éloigne de la seconde extrémité fermée du premier cylindre et le second réactif est introduit dans la seconde extrémité fermée du premier cylindre,
pour entraîner le premier piston au cours d'une seconde course de compression dans laquelle un second réactif est comprimé dans la seconde extrémité fermée du premier cylindre, et
pour convertir une énergie mécanique du premier piston en énergie électrique au cours d'une seconde course de détente/échappement dans laquelle le premier piston s'éloigne de la seconde extrémité fermée du premier cylindre suite à une réaction chimique dans la seconde extrémité fermée du premier cylindre, évacuant ainsi au moins partiellement un produit de réaction dans la première extrémité fermée du premier cylindre.

2. Moteur selon la revendication 1, comprenant en outre un système de gestion d'énergie couplé électriquement au premier convertisseur, le système de gestion d'énergie comprenant un dispositif de stockage d'énergie pour former une source et un puits d'énergie afin de tirer de la puissance du piston lors de la course de détente du cycle de piston et de restituer de la puissance au piston lors d'au moins une course du cycle de piston.

3. Moteur selon l'une quelconque des revendications précédentes, le premier convertisseur comprenant un circuit magnétique à réluctance variable et/ou à inductance variable et le premier piston comprenant une armature configurée pour interagir avec le circuit magnétique à réluctance variable et/ou à inductance variable.

4. Moteur selon la revendication 1, comprenant en outre un déclencheur de réaction (132), le déclencheur de réaction étant configuré pour amorcer une réaction chimique dans un réactif disposé entre le premier piston et l'extrémité fermée du premier cylindre.

5. Moteur selon l'une quelconque des revendications précédentes, comprenant en outre un troisième orifice (120) configuré pour permettre à un produit de réaction de s'échapper de la première extrémité fermée du premier cylindre.

6. Moteur selon la revendication 5, le premier orifice comprenant une soupape d'admission et le troisième orifice comprenant une soupape d'échappement.

7. Moteur selon l'une quelconque des revendications 1 à 4, le premier orifice étant configuré pour permettre à un produit de réaction de s'échapper de la première extrémité fermée du premier cylindre, le moteur comprenant en outre une soupape configurée pour faire passer le premier orifice d'un état raccordé à un passage d'admission à un état raccordé à un passage d'échappement.

8. Moteur selon l'une quelconque des revendications précédentes dans lequel les courses de détente sont plus longues que les courses d'admission.

9. Procédé pour faire fonctionner un moteur à combustion interne comprenant un premier piston (110) disposé à coulissement dans un premier cylindre (112), le premier cylindre comportant une première extrémité fermée (114) et une seconde extrémité fermée (116), un premier orifice (118) disposé à proximité de la première extrémité fermée du premier cylindre et configuré pour admettre un premier réactif dans la première extrémité fermée du premier cylindre et un deuxième orifice (118) disposé à proximité de la seconde extrémité fermée du cylindre et configuré pour admettre un second réactif dans la seconde extrémité fermée du premier cylindre, et un premier convertisseur (130) pouvant fonctionner avec le premier piston pour convertir une énergie mécanique du premier piston en énergie électrique et inversement, le procédé comprenant, dans chaque cycle de piston d'une pluralité de cycles de piston répétés, ce qui suit :
le premier convertisseur entraîne le premier piston lors d'une première course d'admission dans laquelle le premier piston s'éloigne de la première extrémité fermée du premier cylindre et un premier réactif est introduit dans la première extrémité fermée du premier cylindre,
le premier convertisseur entraîne le premier piston lors d'une première course de compression dans laquelle le premier réactif est comprimé dans la première extrémité fermée du premier cylindre,
le premier convertisseur convertit une énergie mécanique du premier piston en énergie électrique lors d'une première course de détente/échappement dans laquelle le premier piston s'éloigne de la première extrémité fermée du premier cylindre suite à une réaction chimique dans la première extrémité fermée du premier cylindre, évacuant ainsi un produit de réaction dans la seconde extrémité fermée du premier cylindre,
le premier convertisseur entraîne le premier piston lors d'une seconde course d'admission dans laquelle le premier piston s'éloigne de la seconde extrémité fermée du premier cylindre et le second réactif est introduit dans la seconde extrémité fermée du premier cylindre,
le premier convertisseur entraîne le premier piston lors d'une seconde course de compression dans laquelle un second réactif est comprimé dans la seconde extrémité fermée du premier cylindre, et
le premier convertisseur convertit une énergie mécanique du premier piston en énergie électrique lors d'une seconde course de détente dans laquelle le premier piston s'éloigne de la seconde extrémité fermée du premier cylindre suite à une réaction chimique dans la seconde extrémité fermée du premier cylindre, évacuant ainsi au moins partiellement un produit de réaction dans la première extrémité fermée du premier cylindre.

10. Procédé selon la revendication 9, les courses de détente étant plus longues que les courses d'admission.
